# EUROPEAN PATENT SPECIFICATION

(11) **EP 0 906 154 B1**
(45) Date of publication and mention of the grant of the patent: **22.08.2001**
(21) Application number: 97928213.4
(22) Date of filing: 13.06.1997
(51) Int. Cl.: B01J 37/20

(54) **A PROCESS FOR PRESULPHIDING HYDROCARBON CONVERSION CATALYSTS**
VERFAHREN ZUR VORSCHWEFELUNG VON KOHLENWASSERSTOFFUMWANDLUNGSKATALYSATOREN
PROCEDE POUR PRESULFURER LES CATALYSEURS DE CONVERSION D'HYDROCARBURES

(30) Priority: 17.06.1996 US 668039
(43) Date of publication of application: 07.04.1999
(73) Proprietor: SHELL INTERNATIONALE RESEARCH MAATSCHAPPIJ B.V., 2596 HR Den Haag (NL)
(72) Inventor: LOCKEMEYER, John, Robert, Sugar Land, TX 77479 (US)
(86) International application number: PCT/EP97/03130
(87) International publication number: WO 97/48488

(56) References cited:
- EP-A- 0 153 233
- EP-A- 0 181 254
- EP-A- 0 466 568
- WO-A-93/02793
- GB-A- 646 408
- US-A- 3 516 947

## Description

This invention relates to a process for presulphurizing or presulphiding hydrocarbon conversion catalysts, presulphurized catalysts and their use in hydrocarbon conversion processes.

It is well known that it is often desirable to employ the step of "presulphiding" or "presulphurizing" of the metals forming part of the composition of certain catalysts for refining and/or hydroconverting hydrocarbons, either before they are used initially, i.e., fresh catalysts, or before they are re-used following regeneration. Hydrocarbon conversion catalysts, such as hydrotreating, hydrocracking and tailgas treating catalysts are typically subjected to such a "presulphiding step".

A hydrotreating catalyst may be defined as any catalyst composition which may be employed to catalyze the hydrogenation of hydrocarbon feedstocks, and most particularly to hydrogenate particular components of the feed stock, such as sulphur-, nitrogen- and metals-containing organo-compounds and unsaturates. A hydrocracking catalyst may be defined as any catalyst composition which may be employed to crack large and complex petroleum derived molecules to attain smaller molecules with the concomitant addition of hydrogen to the molecules. A tail gas catalyst may be defined as any catalyst composition which may be employed to catalyze the conversion of hazardous effluent gas streams to less harmful products, and most particularly to convert oxides of sulphur to hydrogen sulphide which can be recovered and readily converted to elemental sulphur. A reduced catalyst may be defined as any catalyst composition that contains a metal in the reduced state such as, for example, an olefin hydrogenation catalyst. Such metals are typically reduced with a reducing agent such as, for example, hydrogen or formic acid. The metals on these reduced catalysts may be fully reduced or partially reduced.

Catalyst compositions for hydrogenation catalysts are well known and several are commercially available. Typically, the active phase of the catalyst is based on at least one metal of group VIII, VIB, IVB, IIB or IB of the Periodic Table of the Elements. In general, the hydrogenation catalysts contain at least one element selected from Pt, Pd, Ru, Ir, Rh, Os, Fe, Co, Ni, Cu, Mo, W, Ti Hg, Ag or Au supported usually on a support such as alumina, silica, silica-alumina and carbon.

Catalyst compositions for hydrotreating and/or hydrocracking or tail gas treating are well known and several are commercially available. Metal oxide catalysts which come within this definition include cobalt-molybdenum, nickel-tungsten, and nickel-molybdenum supported usually on alumina, silica and silica-alumina, including zeolite, carriers. Also, other transition metal element catalysts may be employed for these purposes. In general, catalysts containing at least one element selected from V, Cr, Mn, Re, Co, Ni, Cu, Zn, Mo, W, Rh, Ru, Os, Ir, Pd, Pt, Ag, Au, Cd, Sn, Sb, Bi and Te have been disclosed as suitable for these purposes.

For maximum effectiveness these metal oxide catalysts are converted at least in part to metal sulphides. The metal oxide catalysts can be sulphided in the reactor by contact at elevated temperatures with hydrogen sulphide or a sulphur-containing oil or feed stock ("in-situ").

However, it is advantageous to the user to be supplied with metal oxide catalysts having sulphur, as an element or in the form of an organo-sulphur compound, incorporated therein. These presulphurized catalysts can be loaded into a reactor and brought up to reaction conditions in the presence of hydrogen causing the sulphur or sulphur compound to react with hydrogen and the metal oxides thereby converting them into sulphides without any additional process steps being needed. These presulphurized catalysts provide an economic advantage to the plant operator and avoid many of the hazards such as flammability and toxicity, which the plant operator encounters when using hydrogen sulphide, liquid sulphides, organic polysulphides and/or mercaptans to sulphide the catalysts.

Several methods of presulphurizing metal oxide catalysts are known. Hydrotreating catalysts have been presulphurized by incorporating sulphur compounds into a porous catalyst prior to hydrotreating a hydrocarbon feedstock. For example, U.S. patent No. 4,530,917 discloses a method of presulphurizing a hydrotreating catalyst with organic polysulphides. U.S. patent No. 4,177,136 discloses a method of presulphurizing a catalyst by treating the catalyst with elemental sulphur. Hydrogen is then used as a reducing agent to convert the elemental sulphur to hydrogen sulphide in situ. U.S. patent No. 4,089,930 discloses the pretreatment of a catalyst with elemental sulphur in the presence of hydrogen. U.S. patent No. 4,943,547 discloses a method of presulphurizing a hydrotreating catalyst by subliming elemental sulphur into the pores of the catalyst then heating the sulphur-catalyst mixture to a temperature above the melting point of sulphur in the presence of hydrogen. The catalyst is activated with hydrogen. Published PCT application No. WO 93/02793 discloses a method of presulphurizing a catalyst where elemental sulphur is incorporated in a porous catalyst and at the same time or subsequently treating the catalyst with liquid olefinic hydrocarbon.

However, these ex-situ presulphurized catalysts must be subjected to a separate activation step prior to contact with the hydrocarbon feed in a hydrocarbon processing reactor.

Therefore, it is an object of the present invention to prepare an activated, presulphurized or presulphided catalyst, either fresh or regenerated, without the requirement for a separate activation treatment prior to contact with the hydrocarbon feed in the reactor.

Therefore, in accordance with the present invention, there is provided a process for presulphurizing porous particles of a sulphidable catalyst containing at least one metal or metal oxide, which comprises
(a) impregnating the catalyst with a solution containing inorganic polysulphide ions to obtain a sulphur-incorporated catalyst in which at least a portion of the sulphide or sulphur is incorporated in the pores of the catalyst; and
(b) heating the sulphur-incorporated catalyst in the presence of a non-oxidizing atmosphere.

The present invention further provides a presulphurized catalyst obtainable by a process according to the invention.

As used in this specification, the term "inorganic polysulphide" refers to polysulphide ions having the general formula S(x)2- where x is an integer greater than 2, i.e. x is an integer having a value of at least 3, preferably from 3 to 9, and more preferably from 3 to 5, and the "inorganic" terminology, in this context refers to the nature of the polysulphide moiety rather than to the counterion, which may be organic. As used herein, the term "inorganic polysulphide solution" refers to a solution containing inorganic polysulphides. As used in this specification, the terms "metal(s)-", "metal oxide(s)-" and "metal sulphide(s)-" containing catalysts include catalyst precursors that are subsequently used as actual catalysts. Further, the term "metal(s)" includes metal(s) in partially oxidized form. The term "metal oxide(s)" includes metal oxide(s) in partially reduced form. The term "metal sulphide(s)" includes metal sulphide(s) that are partially sulphided as well as totally sulphided metals. The above terms include in part other components such as carbides, borides, nitrides, oxyhalides, alkoxides and alcoholates.

In the present invention, a presulphidable metal- or metal oxide-containing catalyst is impregnated with an inorganic polysulphide solution to presulphurize the presulphidable metal or metal oxide catalyst at a temperature and for a time effective to cause incorporation of the sulphide or sulphur into the pores of the catalyst. The catalyst is heated following impregnation under non-oxidizing conditions for a time sufficient to fix the incorporated sulphide or sulphur onto the catalyst.

The catalysts referred to herein as "sulphidable metal oxide catalyst(s)" can be catalyst precursors that are used as actual catalysts while in the sulphided form and not in the oxide form. Since the preparative technique of the instant invention can be applied to regenerated catalysts which may have the metal sulphide not completely converted to the oxides, "sulphidable metal oxide catalyst(s)" also refers to these catalysts which have part of their metals in the sulphided state.

In a preferred embodiment, prior to impregnation with the inorganic polysulphide solution, the metal or metal oxide catalyst particles or pellets are hydrated to equilibrium with air in order to reduce the initial exotherm.

In carrying out the process of the present invention, porous catalyst particles are contacted and reacted with an inorganic polysulphide solution under conditions which cause the sulphide or sulphur compounds to be incorporated into the pores of the catalyst by impregnation. The inorganic polysulphide-incorporated or sulphur compound-incorporated catalysts will be referred to as "sulphur-incorporated catalysts".

The inorganic polysulphide solution is typically prepared by dissolving elemental sulphur in an aqueous ammonium (or ammonium derivative, i.e., tetramethyl ammonium, tetraethyl ammonium, etc.) sulphide solution. Preferred polysulphides include inorganic polysulphides of general formula S₍ₓ₎²⁻ wherein x is an integer greater than 2, preferably from 3 to 9 and more preferably from 3 to 5, such as, for example, S₍₃₎²⁻, S₍₄₎²⁻, S₍₅₎²⁻, S₍₆₎²⁻ and mixtures thereof.

The inorganic polysulphide solution is a red solution in which a dark colouring denotes a long chain polysulphide and a lighter colouring denotes a shorter chain polysulphide. The inorganic polysulphide solution thus prepared is used to impregnate the catalyst particles using a pore volume impregnation method or by incipient wetness such that the pores of the catalyst are filled without exceeding the volume of the catalyst. The amounts of sulphur used in the instant process will depend upon the amounts of catalytic metal present in the catalyst that needs to be converted to the sulphide. For example, a catalyst containing molybdenum would require two moles of sulphur or mono-sulphur compounds to convert each mole of molybdenum to molybdenum disulphide, with similar determinations being made for other metals. On regenerated catalysts, existing sulphur levels may be factored into the calculations for the amounts of sulphur required.

The amount of sulphur typically present in the inorganic polysulphide solution in the present process is in the range of from 5 percent by weight to 50 percent by weight, based on the total weight of the solution. Higher concentrations of sulphur can be obtained by increasing the concentration of the starting ammonium sulphide solution. The inorganic polysulphide solution will generally have a ratio of sulphur to sulphide by weight in the range from 2:1 to 5:1, and preferably in the range from 2:1 to 3:1. The amount of sulphur in the inorganic polysulphide solution is generally such that the amount of sulphur impregnated onto the catalyst particles is typically an amount sufficient to provide for stoichiometric conversion of the metal components from the oxide form to the sulphide form and is generally in the range of from 2 percent by weight to 15 percent by weight, and preferably from 4 percent by weight to 12 percent by weight, based on the total weight of the sulphurized catalyst.

It has been found that the addition of presulphurizing sulphur in amounts down to about 50 percent of the stoichiometric requirement results in catalysts having adequate hydrodenitrification activity, which is an important property of hydrotreating and first stage hydrocracking catalysts. Thus, the amount of presulphurizing sulphur used for incorporation into the catalyst will typically be in the range from 0.2 to 1.5 times the stoichiometric amount, and preferably from 0.4 to 1.2 times the stoichiometric amount.

For hydrotreating/hydrocracking and tail gas treating catalysts containing Group VIB and/or Group VIII metals the amount of presulphurizing sulphur employed is typically 1% to 15% by weight of the catalyst charged, and preferably, the amount of presulphurizing sulphur employed is 4% to 12% by weight of the catalyst charged.

The sulphur impregnation step will typically be carried out at a temperature in the range from 0 °C to 30 °C or higher, up to 60 °C. The lower temperature limit is fixed by the freezing point of the inorganic polysulphide solution under the specific conditions of impregnation, whereas the upper temperature limit is fixed primarily by decomposition of the inorganic polysulphide solution to volatile compounds and elemental sulphur.

Following impregnation of the catalyst particles with the inorganic polysulphide solution, the sulphurincorporated catalyst is subjected to a heat treatment in the presence of a flowing non-oxidizing gas such as, for example, nitrogen, carbon dioxide, argon, helium and mixtures thereof, at a temperature sufficient to drive out most of the residual pore volume water and to fix the sulphur on the catalyst. The heat treatment of the sulphur-incorporated catalyst is preferably carried out using a ramped temperature procedure in which the sulphur-incorporated catalyst is first heated to a temperature in the range of from 50 °C to 150 °C, preferably 120 °C, to drive out most of the pore volume water. The catalyst is then ramped to a final hold temperature in the range of from 120 °C to 400 °C, and preferably from 230 °C to 350 °C, to fix the incorporated sulphur onto the catalyst. Following this heat treatment, the catalyst is cooled to room (ambient) temperature and rehydrated with a water saturated non-oxidizing gas. The resulting catalyst is stable to handling in air.

The presulphurized or presulphided catalyst of the instant invention is then loaded into, for example, a hydrotreating and/or hydrocracking reactor or tail gas reactor, the reactor is heated up to operating (e.g. hydrotreating and/or hydrocracking or tail gas treating) conditions, and the catalyst is then immediately contacted with a hydrocarbonaceous feedstock, without the need for an extended activation of the catalyst with hydrogen prior to contact of the catalyst with the hydrocarbonaceous feedstock. While not wishing to be bound by any particular theory, it is believed that the extended activation period with hydrogen generally required for ex-situ presulphided catalysts is not necessary for catalysts presulphided according to the present invention because, in the present process, most of the sulphur has already reacted with the metal or metal oxides to form metal sulphides, or alternatively, the sulphur is fixed in the pores of the catalyst to such an extent that it does not leave the pores of the catalyst prior to being converted to the sulphide.

The process of the present invention is further applicable to the sulphurizing of spent catalysts which have been oxy-regenerated. After a conventional oxyregeneration process, an oxy-regenerated catalyst may be presulphurized as would fresh catalyst in the manner set forth above.

The present process is particularly suitable for application to hydrotreating and/or hydrocracking or tail gas treating catalysts. These catalysts typically comprise Group VIB and/or Group VIII metals supported on porous supports such as alumina, silica, silica-alumina and zeolites. The materials are well defined in the art and can be prepared by techniques described therein, such as in U.S. patent No. 4,530,911 and U.S. patent No. 4,520,128. Preferred hydrotreating and/or hydrocracking or tail gas treating catalysts will contain a group VIB metal selected from molybdenum, tungsten and mixtures thereof and a Group VIII metal selected from nickel, cobalt and mixtures thereof supported on alumina. Versatile hydrotreating and/or hydrocracking catalysts which show good activity under various reactor conditions are alumina-supported nickel-molybdenum and cobalt-molybdenum catalysts. Phosphorus is sometimes added as a promoter. A versatile tail gas treating catalyst which shows good activity under various reactor conditions is an alumina-supported cobalt-molybdenum catalyst.

The ex-situ presulphurization method of this invention allows the hydrotreating, hydrocracking and/or tail gas treating reactors to be started up more quickly by providing for immediate contact with the hydrocarbonaceous feedstock in the reactor and eliminating the extended activation step with hydrogen which is necessary for conventional ex-situ presulphurized catalysts.

Thus, the present invention further provides a process for converting a hydrocarbonaceous feedstock (i.e., a hydrocarbon conversion process) which comprises contacting the feedstock with hydrogen at elevated temperature in the presence of a presulphurized catalyst according to the invention.

Hydrotreating conditions comprise temperatures in the range from 100 °C to 425 °C and pressures above 40 atmospheres (4.05 MPa). The total pressure will typically be in the range from 400 to 2500 psig (2.76 to 17.23 MPa). The hydrogen partial pressure will typically be in the range from 200 to 2200 psig (1.38 to 15.17 MPa). The hydrogen feed rate will typically be in the range from 200 to 10,000 standard cubic feet per barrel ("SCF/BBL"). The feedstock rate will typically have a liquid hourly space velocity ("LHSV") in the range from 0.1 to 15.

Hydrocracking conditions comprise temperatures in the range from 200 °C to 500 °C and pressures above 40 atmospheres (4.05 MPa). The total pressure will typically be in the range from 400 to 3000 psig (2.76 to 20.68 MPa). The hydrogen partial pressure will typically be in the range from 300 to 2600 psig (2.07 to 17.93 MPa). The hydrogen feed rate will typically be in the range from 1000 to 10,000 standard cubic feet per barrel ("SCF/BBL"). The feedstock rate will typically have a liquid hourly space velocity ("LHSV") in the range from 0.1 to 15. First stage hydrocrackers, which carry out considerable hydrotreating of the feedstock may operate at higher temperatures than hydrotreaters and at lower temperatures than second stage hydrocrackers.

The hydrocarbonaceous feedstocks to be hydrotreated or hydrocracked in the present process can vary within a wide boiling range. They include lighter fractions such as kerosine fractions as well as heavier fractions such as gas oils, coker gas oils, vacuum gas oils, deasphalted oils, long and short residues, catalytically cracked cycle oils, thermally or catalytically cracked gas oils, and syncrudes, optionally originating from tar sands, shale oils, residue upgrading processes or biomass. Combinations of various hydrocarbon oils may also be employed.

Tail gas treatment reactors typically operate at temperatures in the range from 200 °C to 400 °C and at atmospheric pressure (101.3 kPa). About 0.5-5% vol. of the tail gas fed to the reactor will comprise hydrogen. Standard gaseous hourly space velocities of the tail gas through the reactor are in the range from 500 to 10,000 hr⁻¹. There are several ways the subject catalysts can be started up in a tail gas treatment reactor. Claus unit feed or tail gas can be used to start up the subject catalysts. Supplemental hydrogen, as required, may be provided by a gas burner operating at a substoichiometric ratio in order to produce hydrogen.

The invention will be described by the following examples which are provided for illustrative purposes.

### Preparation of Inorganic Polysulphide Solution

An inorganic polysulphide solution for use in the following examples was prepared by adding 42 grams of elemental sulphur to a vigorously stirred solution of ammonium sulphide (150 millilitres, 22 %wt.). The elemental sulphur immediately began to dissolve and the resulting solution became red-orange. The mixture was stirred until all of the sulphur was dissolved. The actual sulphur content of the solution was 30 %wt, and the sulphur to sulphide weight ratio in the solution was 3.0.

### Example 1

A commercial hydrotreating catalyst having the properties listed below was used to prepare the presulphurized catalysts.

**Table A:**

| Catalyst Properties | |
|---|---|
| Nickel | 3.0 %wt |
| Molybdenum | 13.0 %wt |
| Phosphorus | 3.5 %wt |
| Support | gamma alumina |
| Surface Area, m²/g | 162 |
| Water Pore Vol., cc/g | 0.47 |
| Size | 1/16 inch trilobes |

A 50 gram sample of the above catalyst was hydrated to equilibrium with air. The hydrated catalyst was then impregnated with 28.0 millilitres of the above inorganic polysulphide solution. This solution was added dropwise to an agitated bed of catalyst pellets contained in a nitrogen purged (0.5 litres/minute) three hundred millilitre 3N round bottomed flask, using a syringe pump apparatus. The stand on which the round bottomed flask was attached was vibrated using an FMC vibrating table, with the amplitude of vibration set so as to create a tumbling bed of catalyst pellets. The resulting black pellets were then heated from room temperature to 121 °C (250 °F) for one hour. The catalyst was then ramped to the final hold temperature of 260 °C (500 °F) and held for one hour. The final sulphur level was 9.3% by weight of the total catalyst. The sulphur content of the catalyst was analyzed using LECO corporation SC-432 carbon-sulphur analyzer. The properties of the catalyst are listed in Table 1 below.

### Comparative Example A

The commercial hydrotreating catalyst described in Example 1 above was subjected to the following in-situ sulphiding procedure.

A sample of the catalyst was crushed and sieved to 15-45 mesh, loaded into a testing unit having a set pressure of sulphiding gas (5% H₂S/95% H₂) of 1 atmosphere and a flow rate 45 litres/hour. The temperature was then ramped from room temperature up to 204 °C at 0.5 °C per minute and held at that temperature for two hours. The temperature was then increased to 371 °C at a rate of 0.5 °C per minute and held at that temperature for one hour and then cooled to room temperature. Thereafter, the unit was switched to a pure hydrogen flow and target rates and pressures established, and then hydrocarbon feed was introduced. The final sulphur level was 8.8% by weight of the total catalyst. The sulphur content of the catalyst was analyzed using LECO corporation SC-432 carbon-sulphur analyzer. The properties of the catalyst are listed in Table 1 below.

### Catalyst Testing

The catalyst sulphided in Example 1 above was used to hydrotreat a catalytically-cracked heavy gas oil (CCHGO) in a trickle-flow reactor. A sample of the catalyst was crushed and sieved to a 16-45 mesh, diluted with silicon carbide and loaded into a trickle-flow reactor tube. The reactor tube was pressured to 1100 psig (7.6 MPa) with hydrogen at a flow rate of 45 litres per hour. The reactor was then heated to 93 °C and a CCHGO feed was passed over the catalyst at a liquid hourly space velocity (LHSV) of 1.5. The temperature was ramped at a rate of 0.5 °C per hour up to 332 °C and then held for a period of sixty hours. Samples were then collected and analyzed to determine the hydrogenation, hydrodenitrification and hydrodesulphurization activities. Rate constants are reported relative to Comparative Example A.

Comparative Example A was tested in a manner similar to Example 1 above, except that since the catalyst was sulphided by an in-situ sulphiding method, the catalyst was not unloaded from the reactor following sulphiding.

The results are presented in Table 1 below.

As can be seen in Table 1, a presulphiding method according to the invention which utilizes an inorganic polysulphide solution is an effective means for incorporating sulphur into a hydrotreating catalyst (Example 1).

**Table 1**

| Ex. # | Sulphur Source | Heat Temp °C | wt% Sulphur | Sulphur Reten.¹ | Hydro² | HDS ² | HDN² |
|---|---|---|---|---|---|---|---|
| 1 | Inorganic Polysulphide | 121 | 9.3 | 90% | 0.89 | 0.72 | 0.86 |
| Comp. Ex. A | 5% H₂S/H₂ | 371 | 8.8 | NM | 1.0 | 1.0 | 1.0 |

| | | | | | | | |
|---|---|---|---|---|---|---|---|
| NM = Not Measured ¹ Reported as % of sulphur remaining relative to sulphur loaded onto catalyst | | | | | | | |
| ² Relative to H₂S/H₂ sulphided catalyst | | | | | | | |

### Example 2

Z-763 Ni-W/Ultrastable Y zeolite based hydrocracking catalyst, available from Zeolyst International Inc., was presulphurized according to the procedure set forth below.

A 100 gram sample of the above catalyst was hydrated to equilibrium with air. The hydrated catalyst was then impregnated with 23.4 millilitres of the above inorganic polysulphide solution diluted to the water pore volume of 38.6 millilitres. This solution was added dropwise to an agitated bed of catalyst pellets contained in a nitrogen purged (0.5 litres/minute) three hundred millilitre 3N round bottomed flask, using a syringe pump apparatus. The stand on which the round bottomed flask was attached was vibrated using an FMC vibrating table, with the amplitude of vibration set so as to create a tumbling bed of catalyst pellets. The resulting black pellets were then heated from room temperature to 150 °C for one hour. The catalyst was then ramped to the final hold temperature of 343 °C and held for one hour. After cooling to room temperature, the air sensitive catalyst was rehydrated with water using a water saturated nitrogen stream so that the catalyst could be safely handled in air for reactor loading. The final sulphur level was 7.48% by weight of the total catalyst. The sulphur content of the catalyst was analyzed using LECO corporation SC-432 carbon-sulphur analyzer. The properties of the catalyst are listed in Table 2 below.

### Comparative Example B

The commercial hydrocracking catalyst described in Example 2 above was subjected to the following in-situ sulphiding procedure.

A sample of the catalyst was loaded into a testing unit having a set pressure of sulphiding gas (5% H₂S/95% H₂) of 350 psig (2.4 MPa) and a flow rate set to give a gas hourly space velocity (GHSV) of 1500 (e.g., for 40 millilitres of catalyst, the flow rate is 60 litres/hour). The temperature was then ramped from room temperature up to 150 °C in one-half hour and then from 150 °C to 370 °C over a six hour period. The temperature was then held at 370 °C for two hours and then lowered to 150 °C. Thereafter, the unit was switched to a pure hydrogen flow and target rates and pressures established, and then hydrocarbon feed was introduced. The final sulphur level was 5.45% by weight of the total catalyst. The sulphur content of the catalyst was analyzed using LECO corporation SC-432 carbon-sulphur analyzer. The properties of the catalyst are listed in Table 2 below.

### Catalyst Testing

The catalysts sulphided in Example 2 and Comparative Example B above were used to hydrocrack a hydrotreated catalytically-cracked light gas oil in a trickle-flow reactor. A sample of the catalyst was crushed and sieved to a 16-45 mesh, diluted with silicon carbide and loaded into a trickle-flow reactor tube. The reactor tube was pressured to 1500 psig (10.34 MPa) with hydrogen. The reactor was then heated to 150 °C and a hydrotreated catalytically-cracked light gas oil feed was passed over the catalyst at a liquid hourly space velocity (LHSV) of 6.0. The hydrogen to feed ratio in the reactor tube was 6500 standard cubic feet per barrel (SCF/BBL). The temperature was ramped at a rate of 22 °C per day for four days and at a rate of 6 °C per day for five days up to a temperature of 260 °C. The temperature was then adjusted to obtain a target conversion of 12 wt% of 190+ °C in feed. The results are presented in Table 2 below.

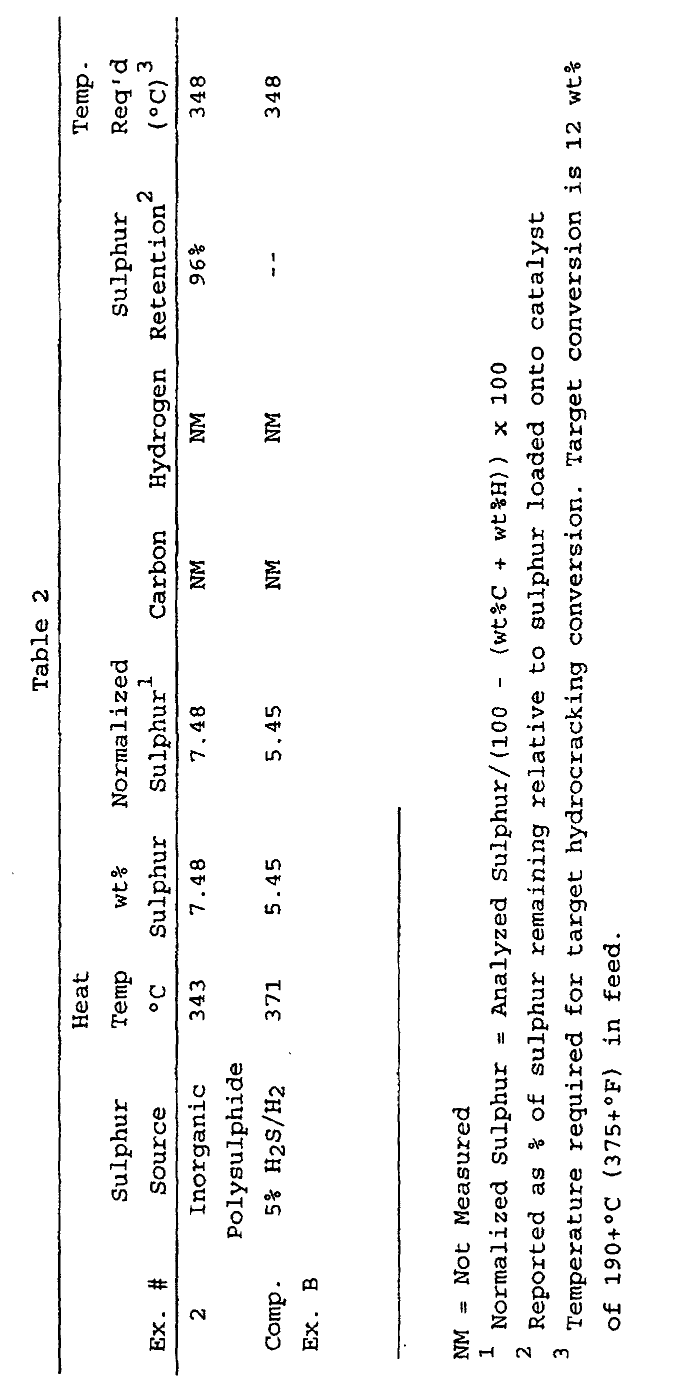

As can be seen in Table 2, the sulphur retention of a catalyst presulphided according to the invention, in which an inorganic polysulphide solution is utilized (Example 2), is 96%, indicating that essentially all of the sulphur remains on the catalyst after the heating step. In addition, the hydrocracking activity of the catalyst in Example 2 is equivalent to that of a hydrocracking catalyst presulphided using a conventional in-situ presulphiding method (Comparative Example B).

## Claims

1. A process for presulphurizing porous particles of a sulphidable catalyst containing at least one metal or metal oxide, which comprises
(a) impregnating the catalyst with a solution containing inorganic polysulphide ions to obtain a sulphur-incorporated catalyst in which at least a portion of the sulphide or sulphur is incorporated in the pores of the catalyst; and
(b) heating the sulphur-incorporated catalyst in the presence of a non-oxidizing atmosphere.

2. A process according to claim 1, wherein the solution comprises inorganic polysulphide ions of general formula S₍ₓ₎²⁻ where x is an integer having a value of from 3 to 9.

3. A process according to claim 1 or claim 2, wherein the solution containing inorganic polysulphide ions is prepared by dissolving elemental sulphur in an aqueous ammonium or ammonium derivative sulphide solution.

4. A process according to any one of the preceding claims, wherein the solution contains an amount of sulphur in the range of from 5 percent by weight to 50 percent by weight, based on the total weight of the solution.

5. A process according to any one of the preceding claims wherein, prior to step a), the catalyst containing at least one metal or metal oxide is hydrated to equilibrium with air.

6. A process according to any one of the preceding claims, wherein impregnation in step a) is carried out at a temperature in the range from 0 °C to 60 °C.

7. A process according to any one of the preceding claims, wherein the heating in step b) is carried out at a temperature in the range from 50 °C to 400 °C.

8. A process according to any one of the preceding claims, wherein the heating in step b) is carried out in the presence of a non-oxidizing gas selected from the group consisting of nitrogen, carbon dioxide, argon, helium and mixtures thereof.

9. A presulphurized catalyst obtainable by a process as claimed in any one of the preceding claims.

10. A process for converting a hydrocarbonaceous feedstock which comprises contacting the feedstock with hydrogen at elevated temperature in the presence of a presulphurized catalyst according to claim 9.

## Patentansprüche

1. Verfahren zum Vorsulfurieren poröser Teilchen eines sulfidierbaren Katalysators mit einem Gehalt an wenigstens einem Metall oder Metalloxid, welches Verfahren umfaßt:
(a) Imprägnieren des Katalysators mit einer anorganische Polysulfidionen enthaltenden Lösung zur Ausbildung eines mit Schwefel versetzten Katalysators, wobei wenigstens ein Teil des Sulfids oder Schwefels in die Poren des Katalysators aufgenommen ist; und
(b) Erhitzen des schwefelhältigen Katalysators in Gegenwart einer nichtoxidierenden Atmosphäre.

2. Verfahren nach Anspruch 1, worin die Lösung anorganische Polysulfidionen mit der allgemeinen Formel S(ₓ)²⁻ umfaßt, worin x eine ganze Zahl mit einem Wert von 3 bis 9 ist.

3. Verfahren nach Anspruch 1 oder 2, worin die anorganische Polysulfidionen enthaltende Lösung durch Auflösen von elementarem Schwefel in einer wäßrigen Ammonium- oder Ammoniumderivatsulfidlösung bereitet wird.

4. Verfahren nach einem der vorstehenden Ansprüche, worin die Lösung eine Schwefelmenge im Bereich von 5 Gew.-% bis 50 Gew.-% enthält, bezogen auf das Gesamtgewicht der Lösung.

5. Verfahren nach einem der vorstehenden Ansprüche, worin vor der Stufe (a) der wenigstens ein Metall oder Metalloxid enthaltende Katalysator bis zum Gleichgewicht mit Luft hydratisiert wird.

6. Verfahren nach einem der vorstehenden Ansprüche, worin die Imprägnierung in Stufe (a) bei einer Temperatur im Bereich von 0°C bis 60°C ausgeführt wird.

7. Verfahren nach einem der vorstehenden Ansprüche, worin das Erhitzen in Stufe (b) bei einer Temperatur im Bereich von 50°C bis 400°C vorgenommen wird.

8. Verfahren nach einem der vorstehenden Ansprüche, worin das Erhitzen in Stufe (b) in Gegenwart eines nichtoxidierenden Gases, ausgewählt aus der aus Stickstoff, Kohlendioxid, Argon, Helium und deren Gemischen bestehenden Gruppe, vorgenommen wird.

9. Vorsulfurierter Katalysator, erhältlich nach einem Verfahren, wie in einem der vorstehenden Ansprüche beansprucht.

10. Verfahren zum Umwandeln eines kohlenwasserstoffhältigen Einsatzmaterials, das ein Inkontaktbringen des Einsatzmaterials mit Wasserstoff bei erhöhter Temperatur in Gegenwart eines vorsulfurierten Katalysators nach Anspruch 9 umfaßt.

## Revendications

1. Procédé de présulfurisation de particules poreuses d'un catalyseur sulfurable contenant au moins un métal ou oxyde métallique, qui comprend :
(a) l'imprégnation du catalyseur avec une solution contenant des ions de polysulfure inorganique pour obtenir un catalyseur incorporé de soufre dans lequel au moins une partie du sulfure ou soufre est incorporée dans les pores du catalyseur; et
(b) le chauffage du catalyseur incorporé de soufre en présence d'une atmosphère non oxydante.

2. Procédé suivant la revendication 1, dans lequel la solution comprend des ions de polysulfure inorganique de formule générale S₍ₓ₎²⁻, dans laquelle x est un nombre entier ayant une valeur de 3 à 9.

3. Procédé suivant l'une ou l'autre des revendications 1 et 2, dans lequel la solution contenant des ions de polysulfure inorganique est préparée par dissolution de soufre élémentaire dans une solution aqueuse de sulfure d'ammonium ou de dérivé d'ammonium.

4. Procédé suivant l'une quelconque des revendications précédentes, dans lequel la solution contient une quantité de soufre allant de 5 % en poids à 50 % en poids, par rapport au poids total de la solution.

5. Procédé suivant l'une quelconque des revendications précédentes, dans lequel, avant l'étape (a), le catalyseur contenant au moins un métal ou oxyde métallique est hydraté en équilibre avec l'air.

6. Procédé suivant l'une quelconque des revendications précédentes, dans lequel l'imprégnation dans l'étape (a) est réalisée à une température allant de 0°C à 60°C.

7. Procédé suivant l'une quelconque des revendications précédentes, dans lequel le chauffage dans l'étape b) est réalisé à une température allant de 50°C à 400°C.

8. Procédé suivant l'une quelconque des revendications précédentes, dans lequel le chauffage dans l'étape b) est réalisé en présence d'un gaz non oxydant choisi dans le groupe comprenant l'azote, le dioxyde de carbone, l'argon, l'hélium et leurs mélanges.

9. Catalyseur présulfurisé obtenable par un procédé suivant l'une quelconque des revendications précédentes.

10. Procédé de conversion d'une charge d'alimentation hydrocarbonée qui comprend la mise en contact de la charge d'alimentation avec de l'hydrogène à température élevée en présence d'un catalyseur présulfurisé suivant la revendication 9.
